# EUROPEAN PATENT APPLICATION

(11) **EP 1 662 782 A1**
(43) Date of publication of application: **31.05.2006**
(21) Application number: 04772547.8
(22) Date of filing: 25.08.2004
(51) Int. Cl.: H04N 5/64, B60R 11/02

(54) **IMAGE DISPLAY SYSTEM AND METHOD OF PRODUCING THE SAME**

(30) Priority: 27.08.2003 JP 2003303687
(71) Applicant: MATSUSHITA ELECTRIC INDUSTRIAL CO., LTD., Kadoma-shi, Osaka 571-8501 (JP)
(72) Inventor: HATTORI, Toshikazu, c/o Matsushita Electric Ind., Chuo-Ku, Osaka-shi, Osaka 540-6319 (JP); KUWABARA, Takashi, c/o Matsushita Electric Ind., Chuo-Ku, Osaka-shi, Osaka 540-6319 (JP)
(74) Representative: Pautex Schneider, Nicole Véronique
(86) International application number: PCT/JP2004/012591
(87) International publication number: WO 2005/022904

(57) **Abstract**

An image display system for displaying an image in a space in a car where a front seat (1A) is placed, including: an image display device (100) which is embedded in a headrest unit (2A) of the front seat (1A) and which enlarges an internally displayed image and projects the enlarged image, as a virtual image, to eyes of a user from one surface exposed on the back surface of the headrest unit (2A); and attaching members (40) which attach the image display device (100) to the headrest unit (2A) so that it can rotate freely to change the orientation of the display surface of the image display device (100) which projects the virtual image.

## Description

### Technical Field

The present invention relates to an image display system for displaying images of movies, television broadcasts and the like, and particularly to an in-car image display system.

### Background Art

With the recent growing popularity of Rear Seat Entertainment (RSE) that is a way to enjoy video and music recorded on a wide variety of media such as digital versatile disks (DVDs) and compact discs (CDs) in the rear seat of a car, in-car image display systems designed to be used for such RSE are becoming increasingly common.

In general, such an image display system includes a liquid crystal display, and causes the liquid crystal display to display images. This type of system is disclosed in, for example, Japanese Laid-Open Patent Application No. 03-10476 Publication (hereinafter referred to as Patent Reference 1) and Japanese Laid-Open Patent Application No. 06-51006 Publication (hereinafter referred to as Patent Reference 2).

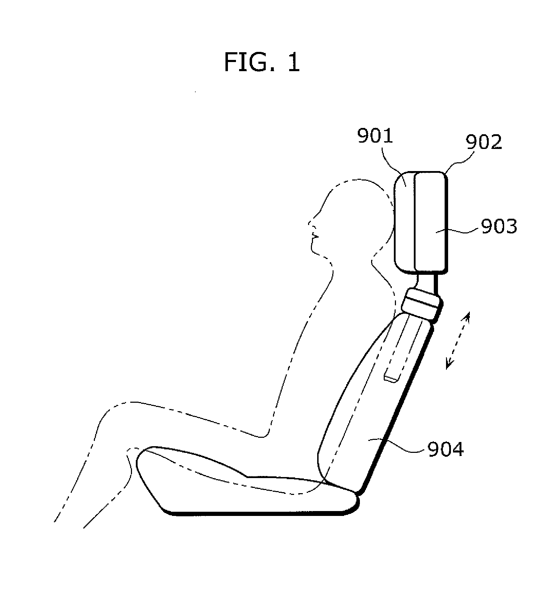

FIG. 1 is an illustration for explaining an image display system of the above Patent Reference 1.

The image display system of this Patent Reference 1 includes a display device 903 equipped with the above-mentioned liquid crystal display.

This display device 903 is mounted behind a headrest unit 902 of a front seat 904 of a car, with the liquid crystal display thereof facing towards the rear of the car. And a cushion 901 is attached to the front surface of the headrest unit 902.

The fellow passenger who sits in the rear seat can view an image displayed on the liquid crystal display of the display device 903 by directly viewing the image.

An image display system in which the liquid crystal display as mentioned above is attached to the ceiling of a car or a central console box has also been developed for commercial use.

On the other hand, the image display system of the above Patent Reference 2 enlarges an image to be displayed on a liquid crystal display and projects the enlarged image towards a fellow passenger's eyes, using a magnifying optical system equipped with a concave mirror. In other words, the fellow passenger views, as an enlarged virtual image, an image displayed on the liquid crystal display. Therefore, the image display system of Patent Reference 2 produces the big screen effect.

However, the image display system of Patent Reference 1 has a problem that it is hard to see the image because the image display size is small due to the limitation of the size of the headrest unit 902. In addition, even if the display size can be larger than the size of the headrest unit 902, not only the space in the car is reduced but also the weight of the display device 903 is increased, and therefore the safety at the time of the crash is impaired. Furthermore, the image display system of Patent Reference 1 is not suitable for long-time viewing because a passenger who is viewing the image easily gets tired due to the short distance between the display device 903 and position of the passenger's eyes.

The image display system of Patent Reference 2 has a still further problem that it is too susceptible to outside light to view the image clearly.

The present invention has been conceived in view of these problems, and it is an object of the present invention to provide an image display system which displays large and clear images adjusted to the user's eye position, without reducing the space in a ca r.

### Disclosure of Invention

In order to achieve the above object, the image display system according to the present invention is an image display system which displays an image in a space where a seat is placed, the system including: an image display device which is embedded in the seat and which enlarges an internally displayed image and projects the enlarged image, as a virtual image, to eyes of a user from one surface exposed on a back side of the seat; and an attaching unit operable to attach the image display device to the seat so that the image display device can rotate freely to change an orientation of a display surface of the image display device which projects the virtual image. For example, this image display system is placed in a space in a car where the seat is a front seat.

Accordingly, it becomes possible not only to make it easier for the user to see an image without reducing the space where the seat is placed, for example, the space in a car, because the image display device enlarges the image and projects the enlarged image, as a virtual image, to the user's eyes, but also to suppress the influence of outside light so as to make the image clearer because the image display device is embedded in the seat. In addition, since the attaching unit attaches the image display device to the seat so that it can rotate freely, the user can turn the display surface of the image display device towards his/her own eyes, and therefore he/she can view the image more easily. In the case where the present system is mounted in the space in a car, the user who sits in the rear seat can view a large and clear image in front of his/her own eyes, without feeing tired.

Here, the image display device may include a grip which can be grasped by the user in order to carry out manual rotation.

Accordingly, the user can easily rotate the image display device by grasping the grips.

The image display system may further include a rotating unit operable to rotate the image display device.

Accordingly, the user can easily rotate the image display unit without taking the trouble to touch the image display unit.

The image display system may further include a reclining angle detecting unit operable to detect a reclining angle of the seat; and a rotation controlling unit operable to control the rotating unit so that the display surface of the image display device faces towards a predetermined position, based on a result of the detection performed by the reclining angle detecting unit.

Accordingly, the rotation controlling unit controls the rotating unit in accordance with the reclining angle so as to face the display surface of the image display device towards the predetermined position. Therefore, for example, when the predetermined position is the user's eye position, even if a person who sits in the seat reclines the seat, the user can turn the display surface of the image display device towards the user's eyes without taking the trouble to rotate the image display device, and therefore the usability is improved.

The image display system may further include a display angle detecting unit operable to detect a display angle of the display surface of the image display device with respect to the back side of the seat, wherein in the case of judging, based on the result of the detection performed by the display angle detecting unit, that the image display device has been manually rotated by the user, the rotation controlling unit is operable to specify the predetermined position based on a display angle detected after the rotation, and to store the specified position, and in the case of judging, based on the result of the detection performed by the reclining angle detecting unit, that the seat has been reclined, the rotation controlling unit is operable to control the rotating unit so that the display surface of the image display device faces towards the stored predetermined position.

Accordingly, when the user rotates the image display unit, the rotation controlling unit specifies the predetermined position based on the display angle detected after the rotation and stores it, while when the person who sits in the seat reclines the seat, the rotation controlling unit controls the rotating unit so as to face the display surface of the image display device towards the position detected after the reclining. Therefore, the user can set the position towards which the display surface of the image display unit should face by rotating the image display unit in advance, and therefore the usability is improved.

Note that the present invention can also be embodied as an image display method of displaying an image.

### Brief Description of Drawings

FIG. 1 is an illustration for explaining a conventional image display system.
FIG. 2A is a block diagram showing a configuration of an image display system in an embodiment of the present invention.
FIG. 2B is a state diagram showing how the image display device in the above embodiment is attached.
FIG. 3 is an illustration for explaining how the image display device in the above embodiment rotates.
FIG. 4 is a block diagram showing an internal structure of a cabinet of the image display device in the above embodiment.
FIG. 5A and FIG. 5B are illustrations for explaining how the image display device in the above embodiment projects a virtual image, and in particular, FIG. 5A is a diagram showing a positional relationship between user's eyes, a convex lens, a liquid crystal panel and a virtual image, and FIG. 5B is a diagram showing in detail the positional relationship between the convex lens, the liquid crystal panel and the virtual image.
FIG. 6 is a block diagram showing a structure of a display angle detector in the above embodiment.
FIG. 7 is a block diagram showing an internal structure of a motor control device in the above embodiment.
FIG. 8A, FIG. 8B and FIG. 8C are illustrations for explaining how the image display surface of the image display device is kept towards the user's eyes even if the front seat is reclined.
FIG. 9 is a flowchart showing the operations of the motor control device in the above embodiment.
FIG. 10 is an external view showing an appearance of an image display system according to a first modification of the above embodiment.
FIG. 11 is a block diagram showing an internal structure of an image display device according to a second modification of the above embodiment.
FIG. 12 is an illustration for explaining a shape of a concave mirror according to the second modification of the above embodiment.
Fig. 13 is an illustration for explaining how the liquid crystal panel according to the second modification of the above embodiment moves.
FIG. 14 is a block diagram showing an internal structure of an image display device according to a third modification of the above embodiment.
FIG. 15 is a block diagram showing an internal structure of an image display device according to a fourth modification of the above embodiment.
FIG. 16 is a block diagram showing an internal structure of an image display device according to a fifth modification of the above embodiment.
FIG. 17 is a block diagram showing an internal structure of an image display device according to a sixth modification of the above embodiment.

### Best Mode for Carrying Out the Invention

The image display system in the embodiment of the present invention will be described below with reference to the diagrams.

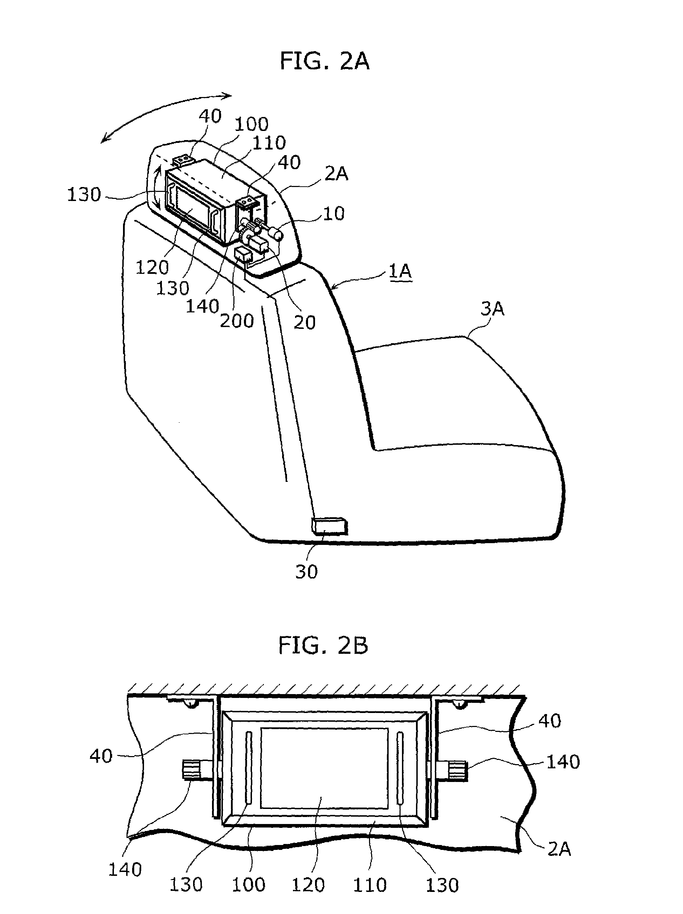

FIG. 2A is a block diagram showing the configuration of the image display system in the embodiment of the present invention.

This image display system is placed in the space in a car and displays a large and clear image with a focus on the eyes of a passenger (user) who sits in the back seat. The image display system includes: an image display device 100 which displays images; two attaching members for attaching the image display device 100 on a front seat 1A so that it can rotate freely; a motor 10 for rotating the image display device 100 so as to change the orientation of the image display surface of the image display device 100; a display angle detector 20 which detects the display angle of the image display surface of the image display device 100 with respect to the back side of the front seat 1A; a reclining angle detector 30 which detects the reclining angle of the front seat 1A; and a motor control device 200 which controls the motor 10 depending on the detection results of the display angle detector 20 and the reclining angle detector 30.

In such image display system, a user who sits in the back seat can rotate the image display device 100 manually so that the image display surface of the image display device 100 faces his/her own eyes. In addition, even if the passenger who sits in the front seat 1A reclines the front seat 1A, the motor 10 rotates the image display device 100 so as to keep the image display surface of the image display device 100 towards the user's eyes.

The image display device 100 includes: an approximately rectangular cabinet 110 which contains a magnifying optical system such as a lens; a translucent plate 120 which is attached to the cabinet 110 so as to cover an aperture formed on one surface of the cabinet 110; a pair of approximately U-shaped grips 130 which are attached on one surface of the cabinet 110 so that the translucent plate 120 is interposed between the grips 130; and a rotating shaft 140 which is provided on both sides of the cabinet 110 in a protruding manner.

Such image display device 100 is embedded in the headrest unit 2A so as to be rotated up and down around the rotating shaft 140, with one surface on which the grips 130 and the translucent plate 120 of the cabinet 110 are attached being exposed towards the rear, so that the image display device 100 displays an image generated inside the cabinet 110, outside the cabinet 110 via the translucent plate 120. In other words, the above-mentioned image display surface is the front surface of this translucent plate 120.

The attaching members 40 are made of metal plates, each of which is bent in an approximately "L" shape. An insertion hole for inserting the rotating shaft 140 of the image display device 100 is formed on one end of each attaching member 40, while a screw insertion holes for inserting screws for fastening the attaching member 40 on the headrest unit 2A is formed on the other end thereof.

FIG. 2B is a state diagram showing how the image display device 100 is attached.

The two attaching members 40, with the rotating shaft 140 of the image display device 100 being inserted through the respective insertion holes thereof, sandwich the cabinet 110 between them, and are fastened to the upper surface inside the headrest unit 2A by the screws inserted through the screw insertion holes, so that the image display device 100 is attached to the headrest unit 2A so as to rotate freely.

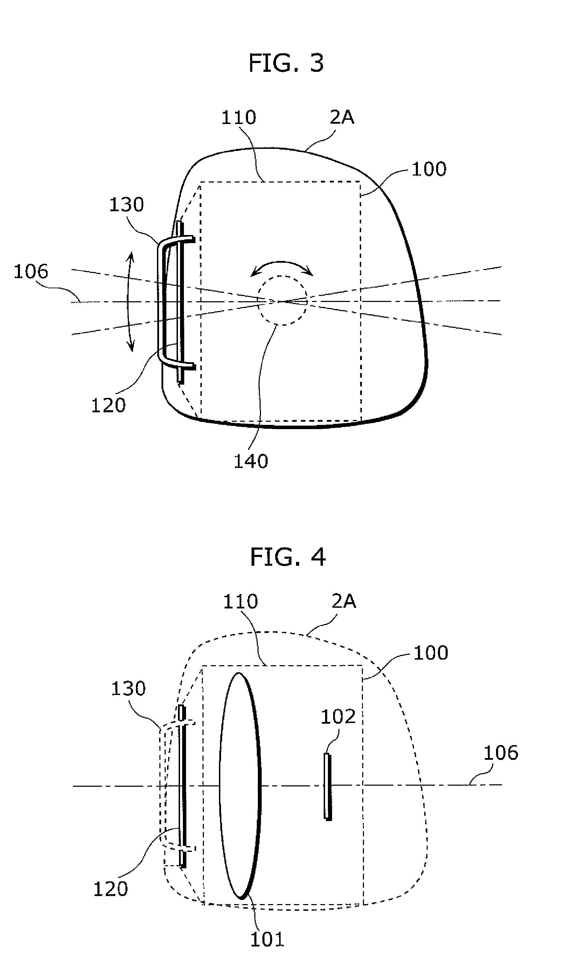

FIG. 3 is an illustration for explaining how the image display device 100 rotates.

As shown in FIG. 3, the image display device 100 rotates around the rotating shaft 140 so as to change the orientation of the image display surface (the front surface of the translucent plate 120), and as a result, changes upward or downward the optical axis of an image to be displayed through the translucent plate 120.

As described above, since the image display device 100 is attached to the front seat 1A so as to rotate freely in the present embodiment, it becomes possible for a user who sits in the back seat to rotate the image display device 100 by grasping the grips so that the image display surface of the image display device 100 faces his/her own eyes for easier viewing of images. In addition, since the image display device 100 is embedded in the headrest unit 2A, it becomes possible to curb the influence of outside light for displaying clear images.

Here, the magnifying optical system of the image display device 100 will be described.

FIG. 4 is a block diagram showing the internal structure of the cabinet 110 of the image display device 100.

In the cabinet 110, a convex lens 101 and a liquid crystal panel 102 that is a small display element for displaying images are placed, as a magnifying optical system.

The convex lens 101 is made of plastic lens, a glass lens, a thin and lightweight Fresnel lens or the like, and placed so as to be approximately opposed to the translucent plate 120.

The liquid crystal panel 102 is placed at the position where the convex lens 101 is interposed between the liquid crystal panel 102 and the translucent plate 120 which is approximately in parallel to the display surface of the liquid crystal panel 102, and the optical axis of the liquid crystal panel 102 passes through the principal point (center) of the convex lens 101. Furthermore, this liquid crystal panel is spaced from the convex lens 101 by the shorter distance than the back focal distance, to be described later, of the convex lens 101.

The image display device 100 including such magnifying optical system provides a user with the images displayed on the liquid crystal panel 101, as virtual images magnified through the translucent plate 120.

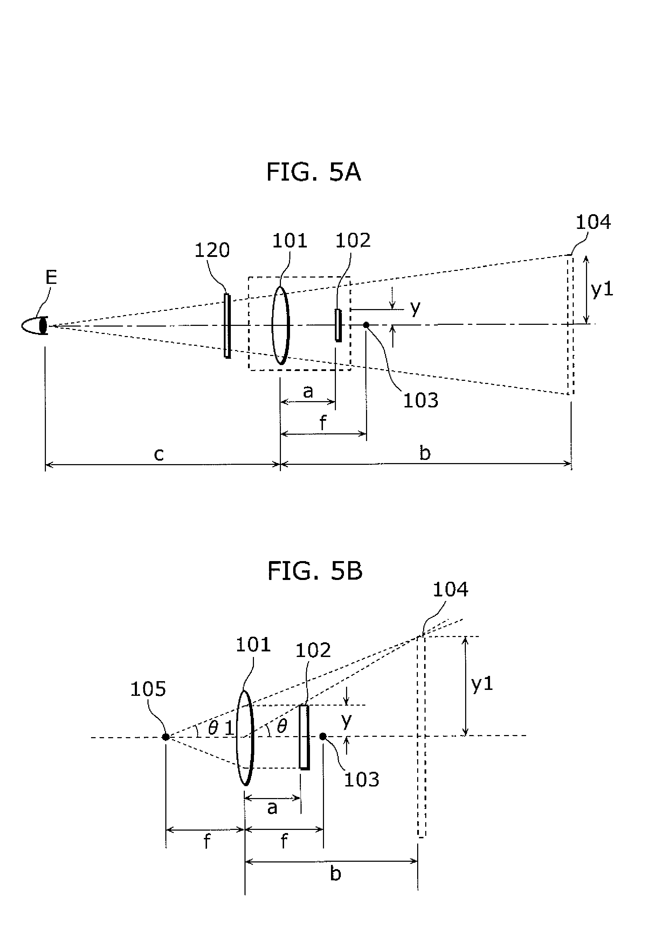

FIG. 5A and FIG. 5B are illustrations for explaining how the image display device 100 projects a virtual image. FIG. 5A is a diagram showing the positional relationship between user's eyes, the convex lens 101, the liquid crystal panel 102 and a virtual image, and FIG. 5B is a diagram showing in detail the relationship between the convex lens 101, the liquid crystal panel 102 and the virtual image.

Here in FIG. 5A and FIG. 5B, "a" indicates the distance from the principal point of the convex lens 101 to the liquid crystal panel 102 along the optical axis 106, "f" indicates the distances respectively to the front focal point 105 and to the back focal point 103 of the convex lens 101, namely, the front focal distance and the back focal distance, "b" indicates the distance to the virtual image 104, and "c" indicates the distance to the user's eye position E. Furthermore, "θ1" indicates the angle between the direction from the front focal point 105 of the convex lens 101 upward to the virtual image 104 and the direction of the optical axis 106, and "θ" indicates the angle between the direction from the principal point of the convex lens 101 upward to the top end of the liquid crystal panel 102 and the direction of the optical axis 106.

In this case, the distance from the optical axis 106 to the top end of the liquid crystal panel 102, namely, the length "y" that is a half of the longitudinal length of the liquid crystal panel 102 (the length vertical to the optical axis 106 in this diagram), is expressed by y=a×tanθ or y=f×tanθ1. The distance from the optical axis 106 to the top end of the virtual image 104, namely, the length "y1" that is a half of the longitudinal length of the virtual image 104 (the length vertical to the optical axis 106), is expressed by y1=b×tanθ or y1=(b+f)×tanθ1.

Here, the magnification ratio (y1/y) that is the ratio between the size of the image displayed on the liquid crystal panel 102 and the size of the virtual image 104 is expressed by y1/y=b/a=f/(f-a).

For example, in the case where the focal distance of the convex lens 101 is f=300[mm], the size of the liquid crystal panel 102 is 4[in] (101.6[mm]), namely y=2[in] (50.8[mm]), and a=250[mm], b=a×f/(f-a)=1500[mm] and y1/y=b/a=6 are true. Therefore, the virtual image 104 of 6×4=24[in] (609.6[mm]) (y1=304.8[mm]) appears 1500[mm] forward of the convex lens 101.

Here, since the user's eye position E is located behind the convex lens 101 by the distance "c", the translucent plate 120 and the convex lens 101 need to be large enough, depending on the distance "c", for the user to see the entire virtual image 104. In other words, in FIG. 5A, the longitudinal length of the convex lens 101 (the length vertical to the optical axis 106 in this diagram) needs to be at least 2×y1×c/(c+b)=203.2[mm], and the longitudinal length of the translucent plate 120 also needs to be equal or slightly shorter than the above length. The lateral lengths required for the convex lens 101 and the translucent plate 120 (the lengths vertical to the paper surface of FIG. 5A) are calculated in the same manner as the above.

As described above, in the image display device 100 of the present embodiment, the image displayed on the liquid crystal panel 102 is projected to the user's eyes as a virtual image magnified by the convex lens 101. Therefore, the user can view the image (virtual image) of larger size than the image displayed on the liquid crystal panel 102 even from a position farther away from the actual position of the liquid crystal panel 102. In other words, in the present embodiment, it is possible not only to display large and clear images for a user but also to relieve his/her fatigue caused by viewing images.

Next, the structure of the display angle detector 20 will be described.

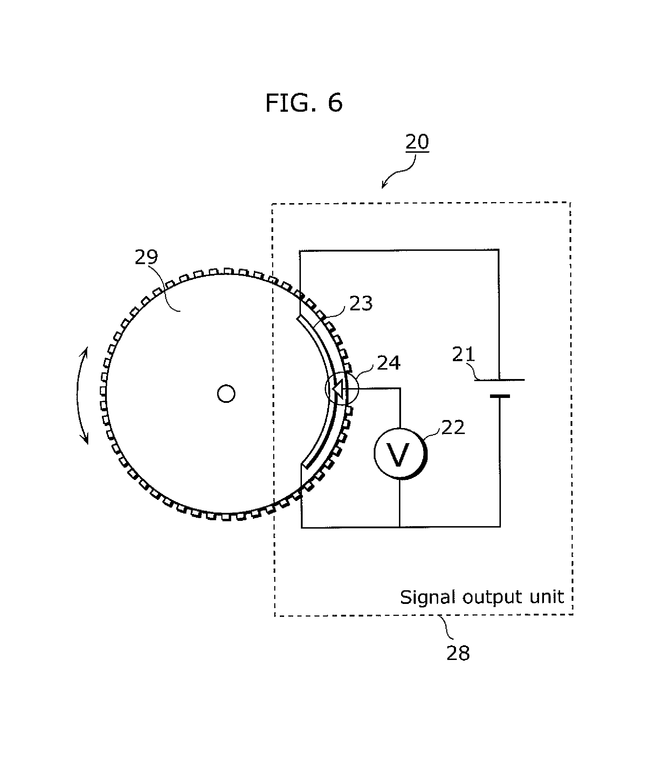

FIG. 6 is a block diagram showing the structure of the display angle detector 20.

The display angle detector 20 includes: a gear 29 which rotates in accordance with the rotation of the rotating shaft 140 of the image display device 100; and a signal output unit 28 which generates and outputs a display angle signal indicating the display angle of the image display surface of the image display device 100.

The signal output unit 28 includes: a resistance line 23; a power 21 which applies a predetermined direct-current voltage to both ends of the resistance line 23; a contact 24 which brings one end thereof into contact with the resistance line 23 so as to move the contact point in accordance with the rotation of the gear 29; and a voltage detection unit 22 which detects the potential difference between the other end of the contact 24 and the one end of the resistance line 3. Here, when the gear 29 rotates, the contact point at which the contact 4 comes into contact with the resistance line 3 shifts. Using this shift, the voltage detection unit 22 detects the voltage in accordance with the rotation of the gear 29.

In other words, the display angle detector 20 outputs, as a display angle signal, the signal of the voltage detected by the voltage detection unit 22.

The reclining angle detector 30 includes a circuit similar to that of the signal detection unit 28 of the display angle detector 20, and outputs, as a reclining angle signal, a voltage signal which varies depending on the reclining angle of the front seat 1A.

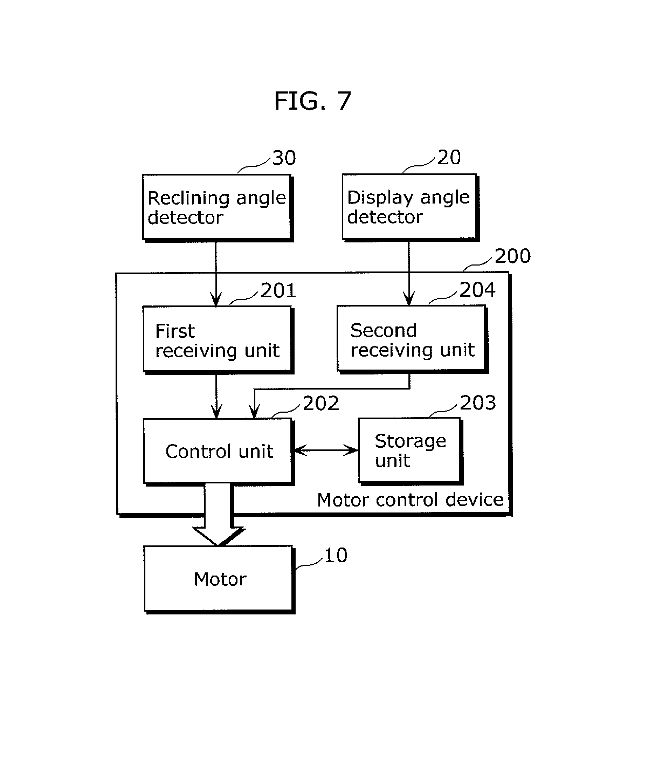

FIG. 7 is a block diagram showing the internal structure of the motor control device 200.

The motor control device 200 includes a first receiving unit 201, a second receiving unit 204, a control unit 202 and a storage unit 203.

The first receiving unit 201 receives a reclining angle signal from the reclining angle detector 30 and outputs it to the control unit 202.

The second receiving unit 204 receives a display angle signal from the display angle detector 20 and outputs it to the control unit 202.

The storage unit 203 has an area for storing the position towards which the image display surface of the image display device 100 should face.

When the control unit 202 judges, based on the display angle signal outputted from the display angle detector 20 via the second receiving unit 204, that the image display device 100 is rotated by the user's manual operation, it specifies the position towards which the image display surface of the image display device 100 should face, based on the display angle indicated by the display angle signal outputted after the rotation, and stores the specified position into the storage unit 203.

In other words, when the user rotates the image display device 100 by grasping the grips 130 so that the image display surface faces his/her own eyes, that eye position is stored by default into the storage unit 203.

The control unit 202 also judges, based on the reclining angle signal outputted from the reclining angle detector 30 via the first receiving unit 201, whether the reclining angle has been changed or not, and when it judges that the angle has been changed, it reads out the default position stored in the storage unit 203. Then, the control unit 202 derives, based on the read-out default position and the reclining angle indicated by the reclining angle signal outputted after the reclining, the rotation direction and the rotation angle of the image display device 100 required for turning the image display surface of the image display device 100 towards the above default position, namely the user's eyes, and drives the motor 10 so that the image display device 100 rotates in that rotation direction and at that rotation angle.

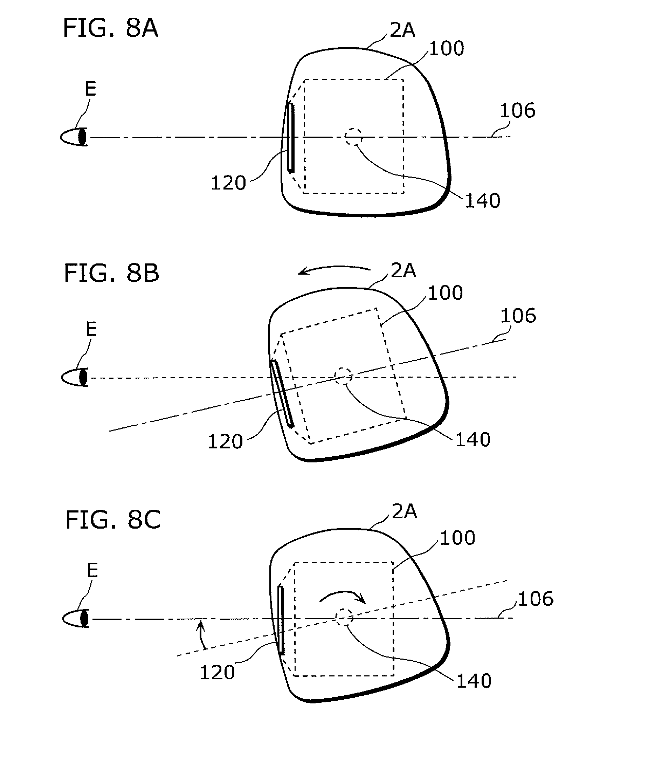

FIG. 8A, FIG. 8B and FIG. 8C are illustrations for explaining how the image display surface of the image display device 100 is kept towards the user's eye position E even if the front seat 1A is reclined.

As shown in FIG. 8A, the user first rotates the image display device 100 by hand so that the image display surface of the image display device 100 faces his/her own eye position E, namely the optical axis 106 points to his/her own eye position E. By doing so, the motor control device 200 specifies the default position based on that orientation of the image display surface of the image display device 100, and stores it.

Next, as shown in FIG. 8B, when the user who sits in the front seat reclines the front seat 1A, the orientation of the image display surface of the image display device 100 deviates from the user's eye position E by such reclining. In other words, the optical axis 106 deviates from the direction from the image display device 100 towards the user's eye position E.

So the motor control device 200 drives the motor 20 to rotate the image display device 100 so as to correct the deviation, as shown in FIG. 8C.

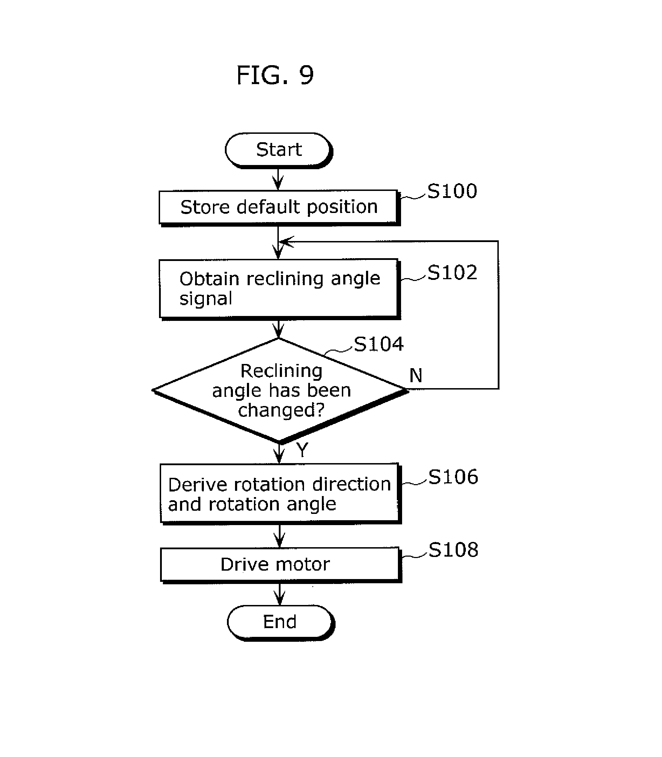

A series of operations of such motor control device 200 in the present embodiment will be described with reference to FIG. 9.

FIG. 9 is a flowchart showing the operations of the motor control device 200.

First, the motor control device 200 stores the position towards which the image display surface of the image display device 100 should face, as a default position (Step S100).

Next, the motor control device 200 obtains a reclining angle signal from the reclining angle detector 30 (Step S102), and judges, based on the reclining angle signal, whether or not the reclining angle of the front seat 1A has been changed (Step S104).

Here, when the motor control device 200 judges that the angle has been changed (Y in Step S104), it derives the rotation direction and the rotation angle necessary for turning the image display surface towards the default position, based on the default position stored in Step S100 and the changed reclining angle (Step S106).

Then, the motor control device 200 drives the motor 10 so as to rotate the image display device 100 in the rotation direction and at the rotation angle derived in Step S106 (Step S108).

As described above, in the present embodiment, the motor control device 200 stores the default position set by the user, and when the front seat 1A is reclined, it drives the motor to rotate the image display device 100 so as to turn the image display surface of the image display device 100 towards the default position. Therefore, even if the front seat 1A is reclined, the user can keep the image display surface of the image display device 100 towards his/her own eyes without taking the trouble to rotate the image display device 100 manually, if only he/she stores the position of his/her eyes, as a default position, into the motor control device 200.

### (Modification 1)

Next, the first modification of the above-mentioned embodiment will be described.

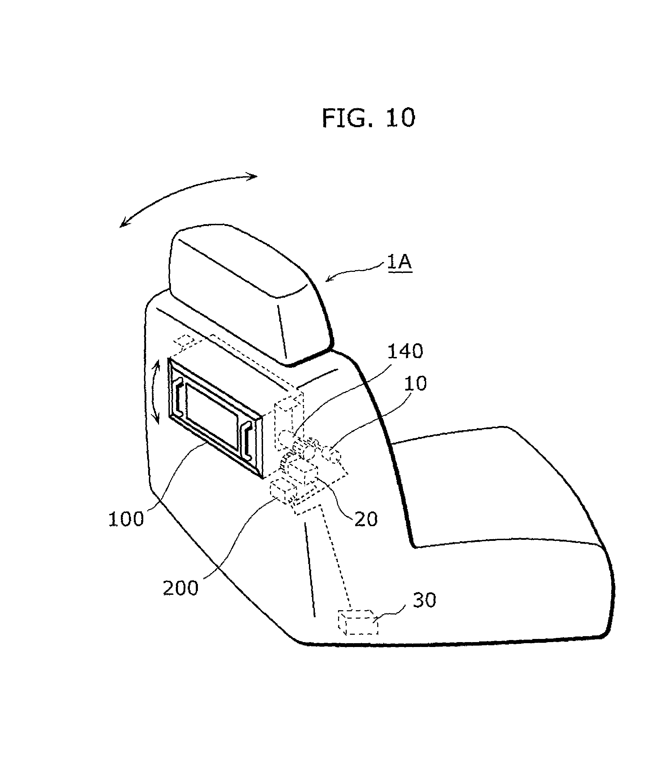

FIG. 10 is an external view showing the appearance of an image display system according to the first modification.

In this image display system of the first modification, the image display device 100, the motor 10 and the display angle detector 20 are embedded in the backrest of the front seat 1A.

If the image display device 100 is embedded in the backrest of the front seat 1A as just described, it becomes possible to increase the size of the image display device 100 and therefore to display larger images for a user.

### (Modification 2)

Next, the second modification regarding the internal structure of the image display device of the above-mentioned embodiment will be described.

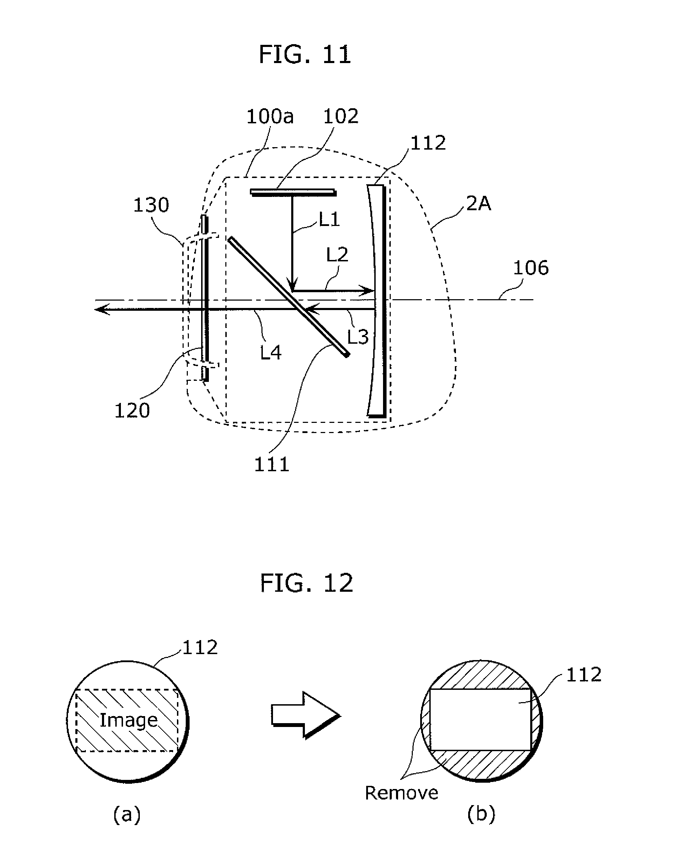

FIG. 11 is a block diagram showing the internal structure of an image display device according to the second modification.

This image display device 100a includes a liquid crystal panel 102, a semi-transmissive mirror 111 and a concave mirror 112.

The liquid crystal panel 102, the semi-transmissive mirror 111 and the concave mirror 112 are placed so that the light of the image displayed on the liquid crystal panel 102 strikes the semi-transmissive mirror 111 at the 45 degree-angle and is reflected off the semi-transmissive mirror 111, and is further reflected off the concave mirror 112 to pass through the semi-transmissive mirror 111, and the light that has passed through it goes outside the image display device 100a, as a virtual image.

More specifically, the light of the image displayed on the liquid crystal panel 102 first goes towards the semi-transmissive mirror 111 along the first light path L1. A part of the light which goes towards the semi-transmissive mirror 111 passes through it, and the rest part of the light is reflected off the semi-transmissive mirror 111 and goes towards the concave mirror 112 along the second light path L2. The light which goes towards the concave mirror 112 is totally reflected off the concave mirror 112 and then goes along the third light path L3. Then, a part of the light which has been totally reflected off the concave mirror 112 is reflected off the semi-transmissive mirror 111 and the rest part of the light passes through the semi-transmissive mirror 111 and goes along the fourth light path L4 to go outside.

In the image display device 100a of the present modification, since the concave mirror 112 is optically equivalent to the convex lens 101 in the above-mentioned embodiment, the image displayed on the liquid crystal panel 102 is displayed for a user, as a virtual image located farther than the actual position of the liquid crystal panel 102 and of larger size than the size of the actual image, through the same optical processing as described with reference to FIG. 5A and FIG. 5B.

Note that the shape of the concave mirror 112 is normally circular, but it may be rectangular.

FIG. 12 is an illustration for explaining the shape of the concave mirror 112.

In the case where the shape of the concave mirror 112 is circular, in order to totally reflect the image displayed in the rectangular area on the liquid crystal panel 102 as shown in FIG. 12 (a), the size of the concave mirror 112 has to be increased. In other words, the circular concave mirror 112 has an area which does not receive the image on the liquid crystal panel 102.

So, as shown in FIG. 12 (b), the shape of the concave mirror 112 may be rectangular so as to conform to that of the area which receives the image on the liquid crystal panel 102.

By doing so, it becomes possible not only to obtain the same effect as described above, but also to remove a useless area of the concave mirror 112, so that the size of the concave mirror 112 can be reduced. As a result, it also becomes possible to reduce the size of the image display device 100a itself.

In addition, the liquid crystal panel 102 may be placed movably.

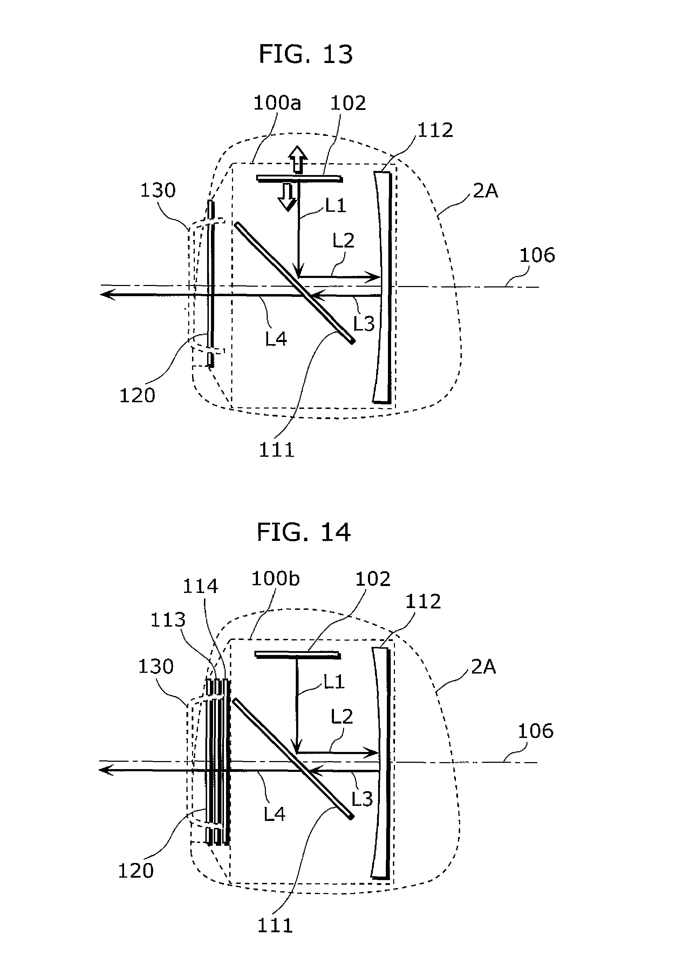

Fig. 13 is an illustration for explaining how the liquid crystal panel 102 moves.

As shown in this FIG. 13, the liquid crystal panel 102 is placed movably in the direction along the first light path L1.

By doing so, a virtual image viewed by a user decreases in size when the liquid crystal panel 102 is moved towards the semi-transmissive mirror 111, while the virtual image increases in size when the liquid crystal panel 102 is moved towards the opposite direction from the semi-transmissive mirror 111. Therefore, the user can adjust the size of the virtual image as he/she likes by moving the liquid crystal panel 102.

### (Modification 3)

Next, the third modification regarding the internal structure of an image display device of the above-mentioned embodiment will be described.

In the image display device of the above-mentioned second modification, the user himself/herself is sometimes reflected and seen in the image. So, the image display device of the third modification curbs the influence of such reflection so as to display a clearer image.

FIG. 14 is a block diagram showing the internal structure of the image display device according to the third modification.

An image display device 100b of the third modification includes a polarizing plate 113 and a λ/4 wave plate 114 in addition to the components of the image display device of the second modification.

The polarizing plate 113 transmits, as polarized light, only a light component of one direction among the incoming light, and the λ/4 wave plate 114 rotates the polarization direction by only 45 degrees with respect to the incoming polarized light.

Such polarizing plate 113 and λ/4 wave plate 114 are placed at the positions where the semi-transmissive mirror 111 is interposed between them and the concave mirror 112. In other words, the polarizing place 113 and the λ/4 wave plate 114 are placed near the inner surface of the translucent plate 120, and the polarizing place 113 is positioned on the outer side seen from the λ/4 wave plate 114, in the image display device 100b.

When the user's image, as light, enters the image display device 100b via the translucent plate 120, first, the polarizing plate 113 receives the incoming light and transmits, as polarized light, only a light component of one direction out of the components of the incoming light. Next, the λ/4 wave plate 114 receives the polarized light which has passed through the polarizing plate 113 and rotates the polarization direction of the polarized light by only 45 degrees.

The polarized light whose polarization direction is rotated as mentioned above is reflected off the concave mirror 112 via the semi-transmissive mirror 111, and again enters the λ/4 wave plate 114 via the semi-transmissive mirror 111.

Here, the λ/4 wave plate 114 further rotates, by 45 degrees, the polarization direction of the reflected light reflected off the concave mirror 112 so as to output the polarized light towards the polarizing plate 113. As a result, the light, whose polarization direction is rotated by only 90 degrees with respect to the light transmitted through the polarizing plate 113 from outside via the translucent plate 120, approaches the polarizing plate 113 from the λ/4 wave plate 114.

Since the polarizing plate 113 has the property of transmitting only a light component of one direction, as described above, it does not transmit the light whose polarization direction is rotated by 90 degrees.

Therefore, in the image display device 100b of the present modification, it is possible to prevent an unclear image for a user, because the user himself/herself is not reflected and seen in that image.

### (Modification 4)

Next, the fourth modification regarding the internal structure of the image display device of the above-mentioned embodiment will be described.

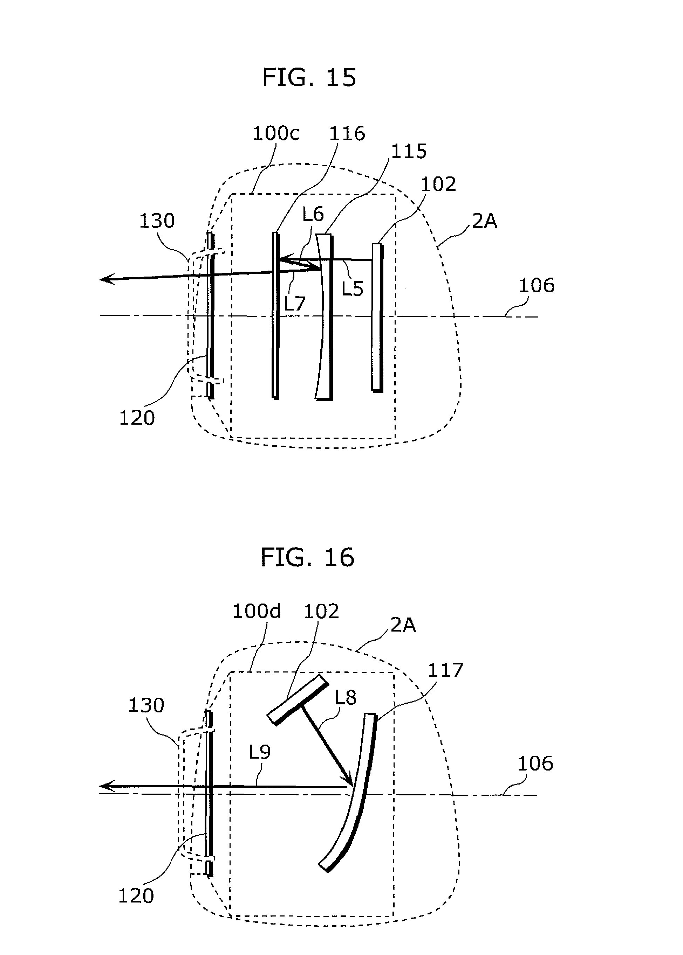

FIG. 15 is a block diagram showing the internal structure of the image display device according to the fourth modification.

This image display device 100c includes a semi-transmissive mirror 116, a semi-transmissive concave mirror 115 and the liquid crystal panel 102.

Each of the semi-transmissive mirror 116 and the semi-transmissive concave mirror 115 transmits therethrough a part of the received light and reflects the rest part of the light.

The liquid crystal panel 102, the semi-transmissive concave mirror 115 and the semi-transmissive mirror 116 are placed so that the semi-transmissive concave mirror 115 is interposed between the liquid crystal panel 102 and the semi-transmissive mirror 116, and the light that has passed through the semi-transmissive mirror 116, out of the light of the image displayed on the liquid crystal panel 102, goes outside the image display device 100c, as a virtual image.

More specifically, the light of the image displayed on the liquid crystal panel 102 first goes towards the semi-transmissive concave mirror 115 along the first light path L5. A part of the light which goes towards the semi-transmissive concave mirror 115 passes through it, and further a part of the transmitted light is reflected off the semi-transmissive mirror 116. Then, the light reflected off the semi-transmissive mirror 116 again goes towards the semi-transmissive concave mirror 115 along the second light path L6. A part of the light which goes towards the semi-transmissive concave mirror 115 is reflected off the semi-transmissive concave mirror 115, and again goes towards the semi-transmissive mirror 116 along the third light path L7. Then, a part of the light which goes towards the semi-transmissive mirror 116 passes through the semi-transmissive mirror 116 and goes outside through the translucent plate 120.

The image display device 100c of the present modification displays, for a user, the image displayed on the liquid crystal panel 102, as a virtual image located farther than the actual position of the liquid crystal panel 102 and of larger size than the size of the actual image, by the magnification effect of the semi-transmissive concave mirror 115 through the same optical processing as described with reference to FIG. 5A and FIG. 5B. The image display device 100c of the present modification also reduces image distortion.

### (Modification 5)

Next, the fifth modification regarding the internal structure of the image display device in the above embodiment will be described.

FIG. 16 is a block diagram showing the internal structure of an image display device according to the fifth modification.

This image display device 100d includes the liquid crystal panel 102 and a decentered concave mirror 117.

Differently from an ordinary concave mirror whose reflecting surface is a parabolic or a spheric surface with the optical axis passing through the center of the mirror, the decentered concave mirror 117 focuses the light in the direction inclined by a specific degree of angle with respect to the parallel light from the front.

The light of the image displayed on the liquid crystal panel first goes towards the decentered concave mirror 117 along the first light path L8. Then, the light which goes towards this decentered concave mirror 117 is totally reflected off the decentered concave mirror 117 and goes along the second light path L9 to go outside through the translucent plate 120.

The image display device 100d of the present modification displays, for a user, the image displayed on the liquid crystal panel 102, as a virtual image located farther than the actual position of the liquid crystal panel 102 and of larger size than the size of the actual image, through the same optical processing as described with reference to FIG. 5A and FIG. 5B. The image display device 100d of the present modification also suppresses the decrease in the amount of light without using a semi-transmissive mirror so as to display a clearer image.

### (Modification 6)

Next, the sixth modification regarding the placement in the image display device in the above embodiment will be described.

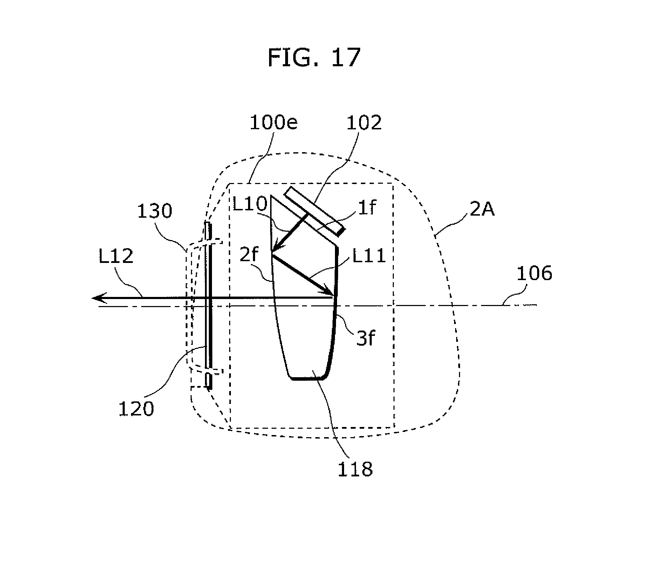

FIG. 17 is a block diagram showing the internal structure of the image display device according to the sixth modification.

This image display device 100e includes a liquid crystal panel 102 and a free-form surface prism 118.

On the free-form surface prism 118, three surfaces 1f to 3f are formed at predetermined angles, and the free-form surface prism 118 outputs the incoming light towards a predetermined direction using these three surfaces 1f to 3f.

The light of the image displayed on the liquid crystal panel 102 first goes towards the surface 1f of the free-form surface prism 118 along the first light path L10. The light which goes towards this surface 1f enters the free-form surface prism 118 through the surface 1f, and is totally reflected off the surface f2. The light reflected off the surface f2 goes along the second light path L11 and is further totally reflected off the surface f3. Then, the light totally reflected off the surface f3 goes along the third light path L12 and goes outside the free-form surface prism 118 through the surface f2. The light which goes outside the free-form surface prism 118 goes outside the image display device 100e through the translucent plate 120.

In other words, the surface 1f of the free-form surface prism 118 of the present modification is formed at an angle which prevents the reflection of the light from the liquid crystal panel 102 as much as possible based on the refractive index and total reflection conditions of the free-form surface prism 118, the surface 2f is formed at an angle which totally reflects the light approaching from the surface 1f so that the light reflected off the surface 3f goes outside the free-form surface prism 118 without being totally reflected thereon, and the surface f3 is formed at an angle which totally reflects the light reflected off the surface 2f. And the curved surface made up of the surfaces 2f and 3f of the free-form surface prism forms a magnifying optical system.

The image display device 100e of the present modification displays, for a user, the image displayed on the liquid crystal panel 102, as a virtual image located farther than the actual position of the liquid crystal panel 102 and of larger size than the size of the actual image, by the magnification effect of the free-form surface prism 118, through the same optical processing as described with reference to FIG. 5A and FIG. 5B. The image display device 100e as described above also reduces its own size and improves its safety, if the free-form surface prism 118 is made of plastic.

The image display system according to the present invention has been described above using the embodiment and modifications, but the present invention is not limited to these.

For example, in the embodiment and the modifications, the system includes the motor 10, the display angle detector 20, the motor control device 200 and the reclining angle detector 30, but the object of the present invention can be achieved without including these constituent elements. In other words, since the image display device for displaying a large image as a virtual image is embedded in the front seat 1A so as to rotate freely, the user can not only view a clear image without being affected by outside light but also adjust the image display surface to his/her own eye position by rotating the image display device by grasping the grips 130 of the image display device.

In addition, in the embodiment and the modifications, a virtual image is created by directly magnifying the image displayed on the liquid crystal panel 102 using a magnifying optical system such as the convex lens 101. But it is also possible to create an intermediate image by magnifying the image displayed on the liquid crystal panel 102 using a relay optical system, before magnifying the image using the magnifying optical system, and then create a virtual image by magnifying the intermediate image using the magnifying optical system. By doing so, the image displayed on the liquid crystal panel 102 is magnified in two steps, and therefore the magnification ratio can be increased, which results in miniaturization of the liquid crystal panel 102.

Furthermore, it is also possible, in the embodiment and the modifications, that the system includes a position detector for detecting the position of a user's head so as to rotate the image display device based on the detection result. In other words, the motor control device 200 specifies the user's eye position based on the detection result of the position detector and drives the motor 10 to rotate the image display device so that the image display surface faces towards that specified position. The position detector is comprised of an imaging device such as a camera. By doing so, it becomes possible to correctly turn the image display surface of the image display device towards the user's eyes, even if he/she changes his/her posture.

Here, the physical arrangement of respective elements such as the grips 130 and the structure of the display angle detector 20, as described in the embodiment and the modifications, are shown just as some examples of the present invention, and the present invention is not limited to these embodiment and modifications. In addition, in the embodiment and the modifications, a virtual image is displayed by the image display device, but the present invention produces the effect of displaying a clear image towards the user's eyes without such a virtual image being displayed.

Furthermore, in the embodiment and the modifications, the present system is placed in the space in a car, but it may be placed in a train, a bus or an airplane. Even in such a case, it is possible to display a large and clear image adjusted to the user's eye position.

### Industrial Applicability

The image display system according to the present invention has the effect that a large and clear image adjusted to a user's eye position can be displayed without reducing the interior space, and is useful as an RSE and the like for displaying images such as movies and television broadcasts for passengers who sit in the rear seat in the interior space, for example, in a car.

## Claims

1. An image display system which displays an image in a space where a seat is placed, said system comprising:
an image display device which is embedded in the seat and which enlarges an internally displayed image and projects the enlarged image, as a virtual image, to eyes of a user from one surface exposed on a back side of the seat; and
an attaching unit operable to attach said image display device to the seat so that said image display device can rotate freely to change an orientation of a display surface of said image display device which projects the virtual image.

2. The image display system according to Claim 1,
wherein said image display device includes a grip which can be grasped by the user in order to carry out manual rotation.

3. The image display system according to Claim 2, further comprising
a rotating unit operable to rotate said image display device.

4. The image display system according to Claim 3, further comprising:
a reclining angle detecting unit operable to detect a reclining angle of the seat; and
a rotation controlling unit operable to control said rotating unit so that the display surface of said image display device faces towards a predetermined position, based on a result of the detection performed by said reclining angle detecting unit.

5. The image display system according to Claim 4, further comprising
a display angle detecting unit operable to detect a display angle of the display surface of said image display device with respect to the back side of the seat,
wherein in the case of judging, based on the result of the detection performed by said display angle detecting unit, that said image display device has been manually rotated by the user, said rotation controlling unit is operable to specify the predetermined position based on a display angle detected after the rotation, and to store the specified position, and
in the case of judging, based on the result of the detection performed by said reclining angle detecting unit, that the seat has been reclined, said rotation controlling unit is operable to control said rotating unit so that the display surface of said image display device faces towards the stored predetermined position.

6. The image display system according to Claim 5,
wherein said image display device is embedded in a headrest of the seat.

7. The image display system according to Claim 5,
wherein said image display device is embedded in a backrest of the seat.

8. The image display system according to Claim 7,
wherein said image display device includes:
a displaying unit operable to display an image on one surface; and
a convex lens which creates a virtual image from the image displayed on said displaying unit.

9. The image display system according to Claim 8,
wherein said convex lens is a Fresnel lens.

10. The image display system according to Claim 7,
wherein said image display device includes:
a displaying unit operable to display an image on one surface; and
a plurality of lenses which create a virtual image from the image displayed on said displaying unit.

11. The image display system according to Claim 7,
wherein said image display device includes:
a displaying unit operable to display an image on one surface;
a concave mirror; and
a semi-transmissive mirror, and
said displaying unit, said concave mirror and said semi-transmissive mirror are placed so that (a) light of the image displayed on said displaying unit strikes said semi-transmissive mirror at a 45 degree-angle so as to be reflected off said semi-transmissive mirror, (b) the reflected light is further reflected off said concave mirror so as to pass through said semi-transmissive mirror, and (c) the light which has passed through said semi-transmissive mirror goes outside said image display device, as a virtual image.

12. The image display system according to Claim 11,
wherein said image display device further includes:
a polarizing plate which transmits only a component of one direction, as polarized light, from among components of incoming light; and
a wave plate which rotates a polarization direction of the incoming polarized light by only a 45-degree angle, and
said polarizing plate and said wave plate are placed so that said semi-transmissive mirror is interposed between said concave mirror, and said polarizing plate and said wave plate, and that said polarizing plate is positioned on an outer side seen from said wave plate, in said image display device.

13. The image display system according to Claim 7,
wherein said image display device includes:
a displaying unit operable to display an image on one surface;
a concave semi-transmissive mirror; and
a semi-transmissive mirror, and
said displaying unit, said concave semi-transmissive mirror and said semi-transmissive mirror are placed so that said concave semi-transmissive mirror is positioned between said displaying unit and said semi-transmissive mirror, and that light which has passed through said semi-transmissive mirror, out of light of the image displayed on said displaying unit, goes outside said image display device, as a virtual image.

14. The image display system according to Claim 7,
wherein said image display device includes:
a displaying unit operable to display an image on one surface; and
a decentered concave mirror which decenters and reflects light of the image displayed on said displaying unit, and outputs the reflected light outside said image display device, as a virtual image.

15. The image display system according to Claim 7,
wherein said image display device includes:
a displaying unit operable to display an image on one surface; and
a prism which receives light of the image displayed on said displaying unit, and outputs the received light outside said image display device, as a virtual image.

16. The image display system according to Claim 15 which is placed in a space in a car where the seat is a front seat.

17. An image display method of displaying an image in a space where a seat is placed, said method comprising:
a displaying step in which an image display device embedded in the seat enlarges an internally displayed image and projects the enlarged image, as a virtual image, to eyes of a user from one surface exposed on a back side of the seat; and
a rotating step in which a motor rotates the image display device so as to change an orientation of a display surface of the image display device which projects the virtual image.

18. The image display method according to Claim 17, further comprising
a reclining angle detecting step of detecting a reclining angle of the seat,
wherein in said rotating step, the motor rotates the image display device so that the display surface of the image display device faces towards a predetermined position, based on a result of the detection performed in said reclining angle detecting step.

19. The image display method according to Claim 18, further comprising:
a display angle detecting step of detecting a display angle of the display surface of the image display device with respect to the back surface of the seat; and
a storing step of, in the case where it is judged, based on the result of the detection performed in said display angle detecting step, that the image display device has been manually rotated by the user, specifying the predetermined position based on a display angle detected after the rotation, and storing the specified position,
wherein in said rotating step, in the case where it is judged, based on the result of the detection performed in said reclining angle detecting step, that the seat has been reclined, the motor rotates the image display device so that the display surface of the image display device faces towards the predetermined position stored in said storing step.
